**Europäisches Patentamt**

**European Patent Office**

**Office européen des brevets**

(19)

(11) Publication number: **0 002 375**
**B1**

(12)

# EUROPEAN PATENT SPECIFICATION

(45) Date of publication of patent specification: **20.10.82**

(21) Application number: **78300727.1**

(22) Date of filing: **01.12.78**

(51) Int. Cl.³: **G 01 N 27/12, H 01 C 7/04, C 04 B 35/50**

(54) Oxygen sensor for use in engine fuel control systems.

(30) Priority: **05.12.77 US 857498**

(43) Date of publication of application:
**13.06.79 Bulletin 79/12**

(45) Publication of the grant of the patent:
**20.10.82 Bulletin 82/42**

(84) Designated Contracting States:
**DE FR GB IT**

(56) References cited:
**DE - A - 2 253 013**
**DE - B - 1 042 080**
**FR - A - 2 245 345**
**FR - A - 2 280 057**
**FR - A - 2 315 151**

(73) Proprietor: **FORD MOTOR COMPANY LIMITED**
**Eagle Way**
**Brentwood Essex CM13 3BW (GB)**
(84) **GB**

(73) Proprietor: **FORD-WERKE AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(73) Proprietor: **Ford Motor Company**
**Dearborn County of Wayne Michigan (US)**
(84) **IT**

(72) Inventor: **Logothetis, Eleftherios, Miltiadis**
**110 Aspen**
**Birmingham Michigan 48009 (US)**
Inventor: **Laud, Kamlakar Ramchadra**
**2222 Fuller Road**
**Ann Arbor Michigan 48105 (US)**
Inventor: **Park, John Kwans**
**3275 Polgos Circle**
**Ann Arbor Michigan 48105 (US)**

(74) Representative: **Drakeford, Robert William et al,**
**15/448 Research & Engineering Centre**
**Laindon Basildon Essex SS15 6EE (GB)**

Courier Press, Leamington Spa, England.

Oxygen sensor for use in engine fuel control systems.

This invention relates to oxygen sensors for use in engine fuel control systems.

Ceramic materials are widely used as electrical resistances and the variation of the resistance of the material with temperature and pressure is well known. For example DE—B—1042082 discloses an electrical resistor having a particularly large temperature coefficient of resistance composed of a sintered mixed metal oxide containing Fe, Cr and/or Co in combination with a lanthanide element, such as La, Pr or Nd, of large ionic radius, and a divalent metal, such as Ca, Sr of Ba, of small ionic radius.

The use of oxygen sensors containing titania that are temperature compensated by a separate chip in engine fuel control systems is illustrated in our copending U.S. patent application Serial No: 839704 (European Patent Application No: 78300464.1). Previous suggestions for providing such temperature compensation at least partially independent of oxygen partial pressure, made, for example, in the next above application, include densifying a ceramic as titania, as described in pending U.S. patent application Serial No: 839700 (our European patent application No: 78300462.5) so as to minimise response to oxygen changes under exhaust gas conditions as well as a suggestion of coating a ceramic with, for example, glass, as described in pending U.S. patent application No: 839,705 (our European patent application No: 78300465.8) so as to provide a barrier to oxygen. In FR—A—2280057, temperature compensation is achieved by sealing a powdered ceramic material into a sheath of oxygen-impervious material.

According to the present invention, there is provided an oxygen sensor for use in an engine fuel control system comprising a first sensing element having an electrical resistivity which varies with oxygen partial pressure and with temperature and a second sensing element having an electrical resistivity which varies with temperature and which is substantially insensitive to variations in oxygen partial pressure, the second sensing element being electrically connected to the first sensing element to compensate for variations in its resistivity due to changes in temperature, characterised in that the second sensing element comprises (a) one or more transition metals selected from iron, manganese, and cobalt, (b) one or more elements of the lanthanide series and yttrium and (c) oxygen, the molar ratio of the said components being about 1:1:3.

The preferred compositions for the second element, referred to herein as the thermistor, comprise praseodymium as the rare earth have the advantage of activation energies comparable to oxygen sensors derived from titania making them especially suitable for use therewith.

The thermistor compositions can be prepared, for example, by heating a mixture of rare earth oxide such as $Pr_{6011}$ and $Fe_{203}$ at temperatures above 1000°C, preferably in a range of about 1250—1450°C, so as to provide compounds corresponding to the formula $RFeO_3$ wherein R is, for example, praseodymium or other rare earth of the lanthanide series or yttrium or compatible mixtures of any of these, preferably all or essentially all single phase. Preferred ceramics can then be made by any suitable process, such as by casting a tape or die pressing into green body shape (e.g. chip, pellet) and sintering at temperatures also above 1000°C, preferably in a range of about 1300—1500°C, to provide compositions with densities currently preferred in a range such as between about 60 and 95% of theoretical. Density, however, is not a critical factor for attaining desired performance of the thermistor in environments such as automotive exhaust gas.

Other methods in the preparation of thermistor compositions of this invention include, rather than heating of the mixed oxides, heating of mixed salts as, for example, by dissolving the separate oxides in stoichiometric ratio (i.e. rare earth of yttrium to iron of about 1:1 gram atom ratio) in hydrochloric acid, evaporating the water, heating slowly to high temperature, e.g. 600°C, followed by sintering at still higher temperature, e.g. 1400°C. Alternatively, the rare earth oxide or yttrium oxide, can be dissolved in such stoichiometric ratio with iron in nitric acid followed by evaporating and heating as above.

The thermistors suitable for employment in feedback fuel control systems are conveniently made during the above noted chip or pellet forming processes by including during, for instance, the die pressing operation spaced apart conducting leads such as platinum wires which then serve as electrical connection means for communicating the thermistor to the other circuit elements of the feedback fuel control system. A preferred arrangement of oxygen sensor, thermistor and other circuit elements is identified in the above-noted U.S. Patent Application Serial No. 839,704, which illustrates a preferred circuit arrangement, which includes a series electrical connection between an oxygen sensor (e.g. a body of titania) and a thermistor such that, when a reference voltage is applied across the series connection, the voltage signal taken at the midpoint between the chips is representative of the oxygen partial pressure independent of temperature. Although electrical arrangement of the oxygen sensor, thermistor and other elements may be made otherwise, such series connection advantageously allows for use of a constant voltage source input to provide a variable voltage signal output. Of course, the thermistors herein may be used alone if desired, to sense temperature in oxygen varying environments or with sensors that monitor other gases.

Preferred praseodymium containing compounds corresponding to $PrFeO_3$ as wherein the molar ratio is, respectively, about 1:1:3, have particular advantage over certain other rare earth compositions when used as temperature compensators for titania oxygen gas sensors such as those disclosed in U.S. 3,886,785 and, particularly, as thermistors to replace the thermistors disclosed in U.S. Patent Application Serial No. 839,706 (European Patent Application No. 78300466.6). This advantage derives from the fact that such thermistor compositions comprising praseodymium can have activation energies that are comparable to titania activation energies at temperatures which correspond to those in a range seen in exhaust gas of internal combustion engines.

The thermistors of this invention may be fabricated in pellet form as beads, discs, cylinders etc. and, as previously mentioned, comprise electrically conducting leads or contacts as platinum wire that are preferably pressed into the thermistor composition during, for instance, shaping operations or, alternatively, connected in other fashion such as with platinum or other conducting paste. One suggested method for fabrication on a large scale the thermistors herein is like that disclosed in U.S. Patent 3,886,785.

As previously indicated, the thermistor compositions herein exhibit such insensitivity to oxygen partial pressure as to minimize necessity of special treatment to provide such oxygen insensitivity, although, however, such treatment is not precluded as, for example, coating to increase life of the thermistor.

It is anticipated that other transition metals such as cobalt and manganese can be used alone, or together, with, or in place of iron in thermistor compositions of this invention, especially those comprising a compound corresponding to the formula $RFeO_3$, wherein R is yttrium or a rare earth element of the lanthanide series, and, particularly, if R comprises preferred praseodymium, to provide not only temperature compensation that is not significantly dependent on oxygen partial pressure but also desirable activation energies that are compatible with sensors such as those derived from titania.

The invention will now be illustrated in the following examples in which reference is made to the accompanying drawings, of which:

Figure 1 illustrates the dependence of resistivity of a $PrFeO_3$ thermistor on oxygen partial pressure for two temperatures;

Figure 2 illustrates the dependence of resistivity in pure oxygen of a $PrFeO_3$ thermistor on the reciprocal of absolute temperature;

Figure 3 illustrates the resistance of a $PrFeO_3$ thermistor in environments with difference oxygen partial pressures (different simulated A/F (air/fuel) ratios) against the reciprocal of absolute temperature; and

Figure 4 illustrates the resistance of a $PrFeO_3$ thermistor and a titania oxygen sensor element in lean and rich simulated A/F ratio environments against temperature.

### Example 1

The compound $PrFeO_3$ was prepared by calcining a mixture of $Pr_6O_{11}$ (99.9% purity, obtained from Research Chemical) and $Fe_2O_3$ (99.9% purity obtained from Research Chemical) at 1350°C for 1 hour, followed by grinding under acetone and subsequent heating at 1350°C for 6 hours.

For the electrical measurements, ceramic specimens were prepared in the form of cylindrical pellets, 3 mm in diameter and 1 cm long, by die-pressing without binder and sintering in alumina boats at 1400°C for 1 hour. The electrical resistivity was measured by a 4-probe technique. Electrical connections to the specimen were made by attaching platinum wires with platinum paste. The specimens were mounted inside a quartz vessel that was placed in a furnace. The oxygen partial pressure ($Po_2$) in the ambient atmosphere was established by various gas mixtures: $O_2/CO_2$ mixtures for $Po_2 > 10^{-6}$ atm and $CO/CO_2$ mixtures for $Po_2 < 10^{-6}$ atm.

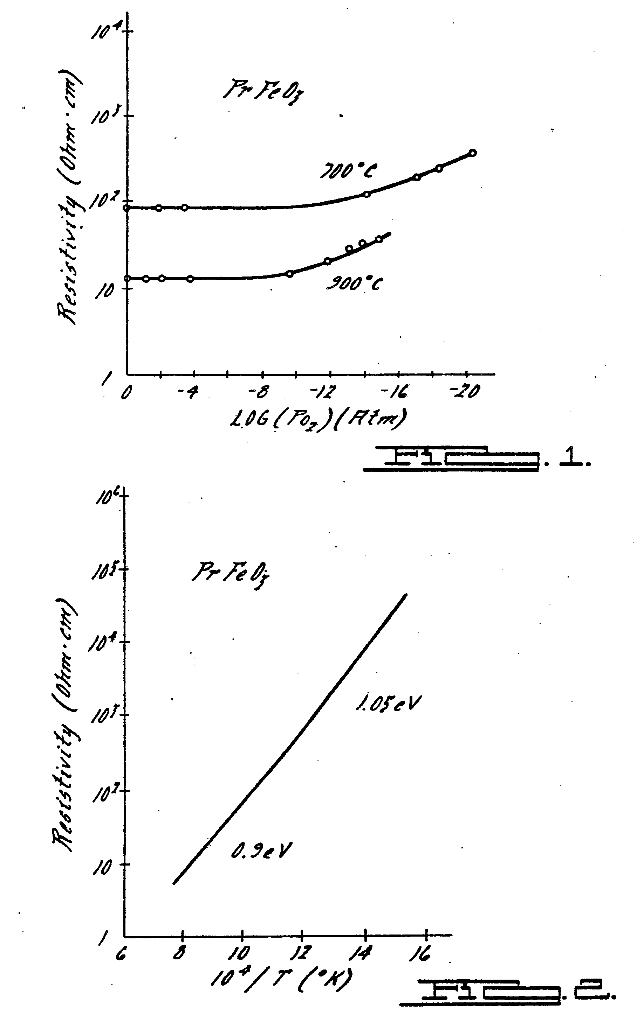

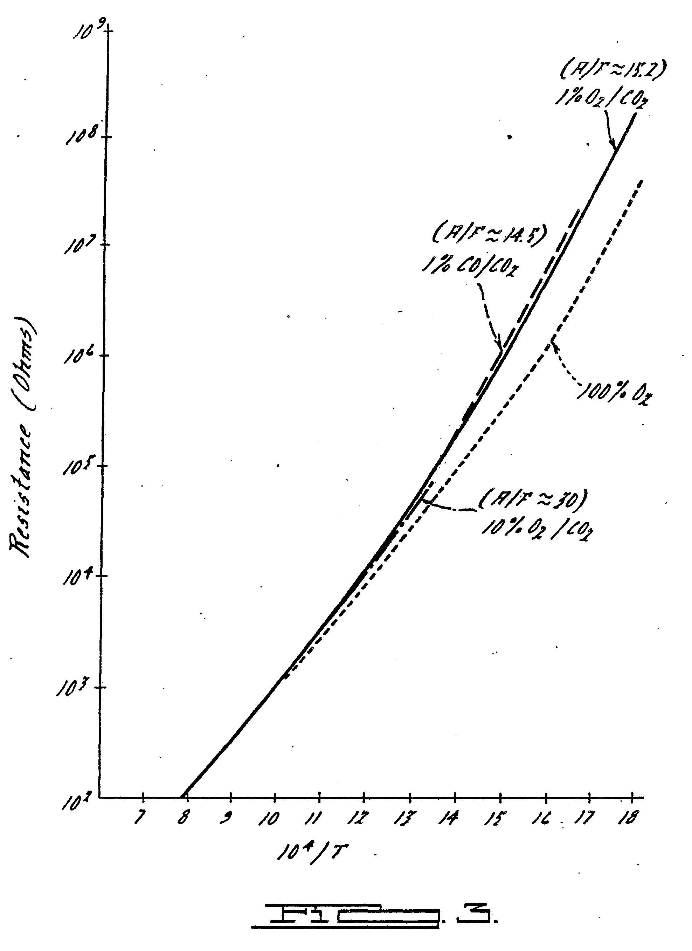

Figure 1 shows the dependence of the electrical resistivity of $PrFeO_3$ in the ambient $Po_2$ at two temperatures, 700 and 900°C. Figure 2 shows the temperature dependence of the resistivity in a pure oxygen environment. The resistivity was calculated from the measured specimen resistance and geometrical dimensions without correcting for the porisity of the specimen. It is expected that for specimens with densities higher than about 80% of theoretical, the uncorrected value of the resistivity is larger than the true value by a factor of about not more than 1.5.

The resistivity of $PrFeO_3$ is independent of changes in $Po_2$ at high $Po_2$

$$(Po_2 > -10^{-4}-10^{-6} \text{ atm})$$

and increases slowly with decreasing $Po_2$ for low $Po_2$. The resistivity of $PrFeO_3$ decreases with increasing temperature with an activation energy of about 1.0 eV. A small break in the log vs $1/T^T$ curve is observed at 620°C.

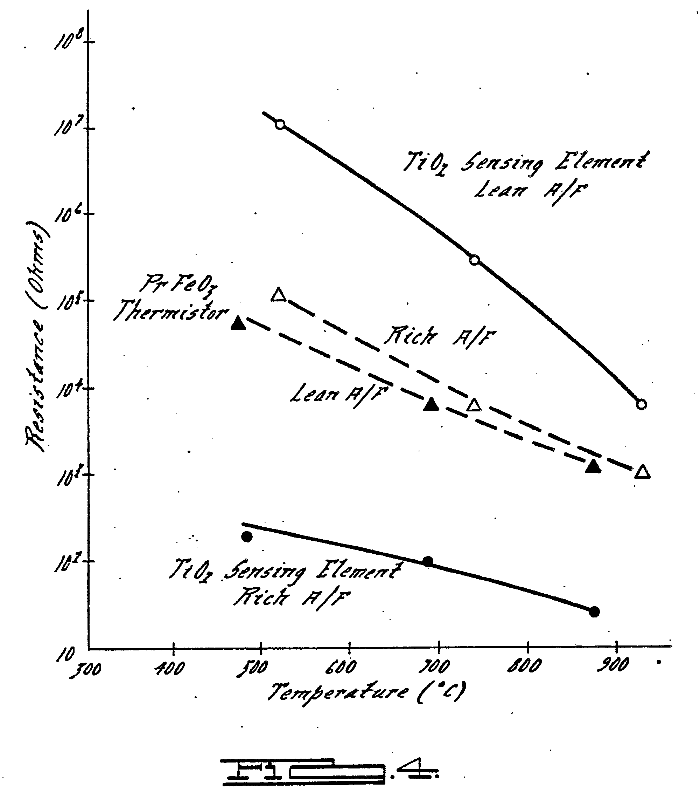

Figure 3, derived from tests employing differing oxygen partial pressure environments corresponding to simulated air fuel (A/F) ratios that are seen in automotive exhaust gas further illustrates the insensitivity of the $PrFeO_3$ thermistor to oxygen partial pressure. The A/F ratios were simulated with mixed gases as described above.

Example 2

A simulated exhaust gas environment using a propane burner is used to obtain resistance in ohms as a function of temperature for a $PrFeO_3$ thermistor element, prepared as described in Example 1 and a titania oxygen sensing element prepared generally in accordance with the method described in U.S. Patent Application No. 839,701 (European Application No. 78300463.3). According to the latter method, a porous body composed of individual grains of titania is immersed in a liquid solution containing a combustion catalyst, such as platinum, so that the liquid substantially penetrates and flows through the body, heating the impregnated body to a temperature of for example 700°C to 900°C for a period of, for example, six hours, so that the catalyst deposits on the grains of the porous body and sinteres thereon without further sintering of the titania. Figure 4 shows the results.

As can be seen, resistance changes of the two elements with temperature can be made to match and the oxygen dependence of the thermistor is negligibly small compared to the titania element. For these tests, the simulated exhaust was obtained with a propane burner and the measurement of resistances of titania and thermistor elements were made by conventional techniques.

## Claims

1. An oxygen sensor for use in an engine fuel control system comprising a first sensing element having an electrical resistivity which varies with oxygen partial pressure and with temperature and a second sensing element having an electrical resistivity which varies with temperature and which is substantially insensitive to variations in oxygen partial pressure, the second sensing element being electrically connected to the first sensing element to compensate for variations in its resistivity due to changes in temperature, characterised in that the second sensing element comprises (a) one or more transition metals selected from iron, manganese, and cobalt, (b) one or more elements of the lanthanide series and yttrium and (c) oxygen, the molar ratio of the said components being about 1:1:3.

2. A sensor in accordance with Claim 1, wherein the transition metal comprises iron.

3. A sensor in accordance with Claim 1 or Claim 2 wherein the rare earth element comprises praseodymium.

4. A sensor in accordance with Claim 1 wherein the second sensing element comprises a compound having the formula $RFeO_3$ wherein R is a rare earth element of the lanthanide series or yttrium.

5. A sensor in accordance with any one of Claims 1 to 4 in which the second sensing element comprises a single phase material a single phase having a density higher than 60% of theoretical density.

6. A sensor in accordance with any one of Claims 1 to 5 wherein the first sensing element is composed of titania.

7. An automotive feedback fuel control system incorporating an oxygen sensor according to any one of Claims 1 to 6.

## Revendications

1. Détecteur d'oxygène à utiliser dans un système régulateur d'alimentation en combustible d'un moteur qui comprend un premier élément détecteur ayant une résistivité électrique qui varie avec la pression partiele d'oxygène et avec la température et un second élément détecteur ayant une résistivité électrique qui varie avec la température et qui est en substance insensible aux variations de la pression partielle d'oxygène, le second élément détecteur étant connecté électriquement au premier élément détecteur de manière à compenser les variations de sa résistivité dues aux modifications de température, caractérisé en ce que le second élément détecteur comprend (a) un ou plusieurs métaux de transition choisis entre le fer, le manganèse et le cobalt, (b) un ou plusieurs éléments choisis entre ceux de la série des lanthanides et l'yttrium, et (c) de l'oxygène, le rapport molaire de ces constituants étant d'environ 1:1:3.

2. Détecteur suivant la revendication 1, dans lequel le métal de transition comprend du fer.

3. Détecteur suivant la revendication 1 ou 2, dans lequel l'élément des terres rares comprend du praséodyme.

4. Détecteur suivant la revendication 1, dans lequel le second élément détecteur comprend un composé de formule $RFeO_3$ où R est un élément des terres rares de la série des lanthanides ou l'yttrium.

5. Détecteur suivant l'une quelconque des revendications 1 à 4, dans lequel le second élément détecteur comprend une matière monophasique ayant une masse volumique supérieure à 60% de la masse volumique théorique.

6. Détecteur suivant l'une quelconque des revendications 1 à 5, dans lequel le premier élément détecteur est composé de dioxyde de titane.

7. Système régulateur par réaction de l'alimentation en combustible pour automobiles, qui comprend un détecteur d'oxygène suivant l'une quelconque des revendications 1 à 6.

## Patentansprüche

1. Sauerstoffmessfühler für ein Motorkraftstoffregelsystem, bestehend aus einem ersten Messfühlerelement mit einem elektrischen Widerstand, der Abhängigkeit vom Sauerstoffpartialdruck und der Temperatur variiert, und einem zweiten Messfühlerelement mit einem elektrischen Widerstand, der sich mit der Temperatur ändert und weitgehend unempfindlich gegen Aenderungen des Sauerstoffpartialdrucks ist, wobei, das zweite Messfühlerelement elektrisch mit dem ersten Messfühlerelement verbunden ist, um durch Temperaturänderung verursachte Variationen in dessen Widerstand auszugleichen, dadurch gekennzeichnet, dass das zweite Messfühlerelement aus (a) einem oder mehreren, unter Eisen, Mangan und Kobalt ausgewählten urbergangsmetallen, (b) einem oder mehreren Elementen aus der Lanthanoidserie und Yttrium sowie (c) Sauerstoff besteht, wobie das Molverhältnis dieser Komponenten etwa 1:1:3 beträgt.

2. Messfühlerelement nach Anspruch 1, worin als Uebergangsmetall Eisen vorliegt.

3. Messfühler nach Anspruch 1 oder Anspruch 2, worin als seltenes Erdelement Praseodym vorliegt.

4. messfühler nach Anspruch 1, worin das zweite Messfühlerelement aus einer Verbindung der Formel $RFeO_3$ besteht, in welcher R für ein seltenes Erdelement aus der Lanthanoidserie oder Yttrium steht.

5. Messfühler nach einem der Ansprüche 1 bis 4, worin das zweite Messfühlerelement aus einem Einphasenmaterial besteht, wobei die einzige Phase eine Dichte höher als 60% der theroretischen Dichte aufweist.

6. Messfühler nach einem der Ansprüche 1 bis 5, worin das erste Messfühlerelement aus titaniumoxyd besteht.

7. Rückgekoppeltes Kraftstoffregelsystem für Kraftfahrzeuge, in dem ein Sauerstoffmessfühler nach einem der Ansprüche 1 bis 6 eingebaut ist.

FIG. 1.

FIG. 2.

FIG. 3.

FIG.4.